# EUROPÄISCHE PATENTSCHRIFT

(11) **EP 1 355 189 B1**
(45) Veröffentlichungstag und Bekanntmachung des Hinweises auf die Patenterteilung: **21.12.2005**
(21) Anmeldenummer: 03009066.6
(22) Anmeldetag: 17.04.2003
(51) Int. Cl.: G03B 13/18, G03B 17/06

(54) **Verfahren zur Ausrichtung und Abstandeinstellung einer Kamera mit Festobjektiv**
Method for aligning and distance adjusting of a fixed focus camera
Méthode d'alignement et d'ajustage de distance d'une caméra fixfocus

(30) Priorität: 18.04.2002 DE 10217392
(43) Veröffentlichungstag der Anmeldung: 22.10.2003
(73) Patentinhaber: SIEMENS AKTIENGESELLSCHAFT, 80333 München (DE)
(72) Erfinder: Osswald,Martin, 76185 Karlsruhe (DE)

(56) Entgegenhaltungen:
- EP-A- 1 022 608
- DE-C- 423 200
- DE-C- 466 660
- US-A- 2 156 433
- US-A- 4 918 476

## Beschreibung

Die Erfindung betrifft ein Verfahren nach dem Oberbegriff des Anspruchs 1 zur Ausrichtung und Abstandseinstellung einer Kamera mit Festobjektiv.

Insbesondere im Bereich der Bildverarbeitung ist es nahezu immer erforderlich, dass eine ein bestimmtes Objekt aufnehmende Kamera einen vorbestimmten Abstand vom Objekt hat und so auf das Objekt ausgerichtet ist, dass sich das Objekt im Zentrum des von der Kamera erfassbaren Bereichs befindet. Zur Einstellung des richtigen Abstands ist es bekannt, den Abstand des Objektes vom Objektiv der Kamera mittels eines Maßstabs zu ermitteln und durch eine entsprechende Korrektur auf das richtige Maß zu bringen. Dies ist sehr umständlich und lässt sich bei einem sich häufig verändernden Abstand in der Praxis nur sehr schlecht realisieren. Darüber hinaus lässt sich auf diese Weise die Ausrichtung der Kamera auf das Objekt nicht überprüfen.

Es ist des Weiteren bekannt, durch Überprüfung des von der Kamera erfassten Bildabschnitts den richtigen Abstand und eine korrekte Ausrichtung einzustellen. Dies lässt sich häufig jedoch nur dann realisieren, wenn an die Kamera ein separater Monitor angeschlossen werden kann, das bedeutet, dass die Kamera einen entsprechenden Monitoranschluss haben muss.

Darüber hinaus ist es bekannt, auf dem Objekt einen Lichtrahmen zu projizieren, welcher vom Anwender auf Schärfe überprüft wird. Sind die Konturen des Lichtrahmens scharf und ist der Lichtrahmen symmetrisch, ist der Abstand und die Ausrichtung korrekt.

Es ist Aufgabe der Erfindung, ein Verfahren zur Ausrichtung und Abstandseinstellung einer Kamera mit Festobjektiv anzugeben, welches einfach durchführbar ist, bzw. eine Vorrichtung zur Durchführung des Verfahrens.

Die Lösung dieser Aufgabe ergibt sich aus den Merkmalen des kennzeichnenden Teils des Anspruchs 1 bzw. des Anspruchs 7. Vorteilhafte Weiterbildungen der Erfindung ergeben sich aus den Unteransprüchen.

Gemäß der Erfindung ist ein Verfahren zur Ausrichtung und Abstandseinstellung einer Kamera mit Festobjektiv dadurch gekennzeichnet, dass auf ein von der Kamera zu erfassendes Objekt wenigstens zwei Lichtstrahlen projiziert werden und der Abstand der Bildpunkte auf dem Bildaufnahmeelement der Kamera mit einem Referenzmaß verglichen wird.

Des Weiteren ist gemäß der Erfindung eine Kamera mit Festobjektiv dadurch gekennzeichnet, dass wenigstens zwei Lichtquellen vorhanden sind, welche jeweils einen auf ein von der Kamera zu erfassendes Objekt gerichteten Lichtstrahl abgeben, und dass das Bildaufnahmeelement der Kamera ein Referenzmaß aufweist. In vorteilhafter Weise ist der Verlauf der Lichtstrahlen konvergierend.

Dadurch, dass auf ein von der Kamera zu erfassendes Objekt wenigstens zwei Lichtstrahlen projiziert werden und der Abstand der durch die Lichtstrahlen erzeugten Bildpunkte auf dem Bildaufnahmeelement der Kamera mit einem Referenzmaß verglichen wird, lässt sich auf einfache Weise der korrekte Abstand der Kamera von dem von der Kamera zu erfassenden Objekt einstellen. Entspricht der Abstand der durch die Lichtstrahlen erzeugten Bildpunkte auf dem Bildaufnahmeelement der Kamera dem Referenzmaß, ist der Abstand der Kamera von dem Objekt korrekt. Ist der Abstand der Bildpunkte größer als das Referenzmaß, ist der Abstand der Kamera von dem Objekt zu klein. Ist der Abstand der Bildpunkte kleiner als das Referenzmaß, ist der Abstand der Kamera von dem Objekt zu groß. Durch Veränderung des Abstands der Kamera von dem Objekt so lange, bis der Abstand der Bildpunkte dem Referenzsignal entspricht, lässt sich der korrekte Abstand der Kamera von dem Objekt einstellen.

Als besonders vorteilhaft hat sich eine Ausführungsform der Erfindung herausgestellt, bei der die Lichtmenge der auf das Bildaufnahmeelement auftreffenden Bildpunkte gemessen wird, wobei in besonders vorteilhafter Weise die Messung der Lichtmenge hinter einer Blende erfolgt.

Durch die Messung der Lichtmenge der auf das Bildaufnahmeelement auftreffenden Bildpunkte lässt sich die Einstellung des Abstands der Kamera von dem zu erfassenden Objekt automatisch vornehmen. Des Weiteren lässt sich die Empfindlichkeit dadurch einstellen, dass ein Toleranzbereich der Lichtmenge angegeben wird, innerhalb dessen der Abstand der Kamera vom Objekt als gut erkannt wird. So lässt sich bei einem als CCD- oder CMOS-Sensor ausgebildeten Bildaufnahmeelement beispielsweise eine Anzahl von Pixel angeben, bei der die Lichtmenge als gut erkannt wird. Das Erreichen dieses Ereignisses kann durch eine Anzeige an der Kamera, wie beispielsweise eine Leuchtdiode, signalisiert werden.

Als besonders vorteilhaft hat sich eine Anordnung zur Durchführung des vorstehend beschriebenen Verfahrens herausgestellt, bei welcher an der Kamera wenigstens zwei Lichtquellen vorhanden sind, welche jeweils einen auf ein von der Kamera zu erfassendes Objekt gerichteten Lichtstrahl abgeben. Die Lichtquellen können als LED ausgebildet sein, welche eine Linse aufweisen.

In besonders vorteilhafter Weise weist das Bildaufnahmeelement der Kamera ein Referenzmaß auf, welches als streifenförmiger Rahmen ausgebildet ist, der das Bildaufnahmeelement umschließt. Dadurch, dass das Referenzmaß als Rahmen ausgebildet ist, lässt sich der Abstand der Kamera von dem Objekt bzw. der davon abhängende Abstand der beiden auf dem Bildaufnahmeelement abgebildeten Bildpunkte auf sehr einfache Weise einstellen. Es braucht lediglich darauf geachtet zu werden, dass sich die beiden Bildpunkte innerhalb des Rahmenstreifens befinden. Befinden sich die Bildpunkte außerhalb des Rahmens, ist der Abstand der Kamera von dem Objekt zu gering. Befinden sich die Bildpunkte so dicht beieinander, dass sie nicht mehr im Rahmenstreifen angeordnet sind, ist der Abstand der Kamera von dem Objekt zu groß.

In besonders vorteilhafter Weise ist der Rahmenstreifen als Messelement ausgebildet, zur Messung der Lichtmenge. Hierdurch lässt sich die Einstellung des Abstands der Kamera von dem Objekt automatisieren. Der Abstand der Kamera von dem Objekt muss so lange verändert werden, bis sich die beiden Bildpunkte innerhalb des Rahmenstreifens befinden.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigen:
- Figur 1: eine schematische Anordnung zur Durchführung des erfindungsgemäßen Verfahrens mit richtig eingestelltem Abstand zwischen Kamera und Objekt,
- Figur 2: die in Figur 1 dargestellte Anordnung mit zu gering eingestelltem Abstand zwischen Kamera und Objekt und
- Figur 3: die in Figur 1 dargestellte Anordnung mit zu groß eingestelltem Abstand zwischen Kamera und Objekt.

Wie der Zeichnung entnommen werden kann, wird ein Objekt 2 mittels eines Festobjektivs 1 auf einem Bildaufnahmeelement 5 einer Kamera abgebildet. An zwei gegenüberliegenden Seiten des Objektivs 1 sind zwei Leuchtdioden 3, 4 angeordnet, deren Licht mittels nicht dargestellter Linsen zu jeweils einem Lichtstrahl 3a, 4a gebündelt wird. Die Lichtstrahlen 3a, 4a verlaufen konvergierend in einem Winkel zur Objektivachse 1a.

Am Rand des Bildaufnahmeelements 5, welches als CCD- oder CMOS-Sensor ausgebildet ist, ist ein streifenförmiger Rahmen 6 angeordnet, mittels welchem die auf ihn auftreffende Lichtmenge gemessen werden kann. Dadurch, dass der Rahmen 6 lichtempfindlich ist, wird nicht auf dem Rahmen 6 auftreffendes Licht weggeblendet.

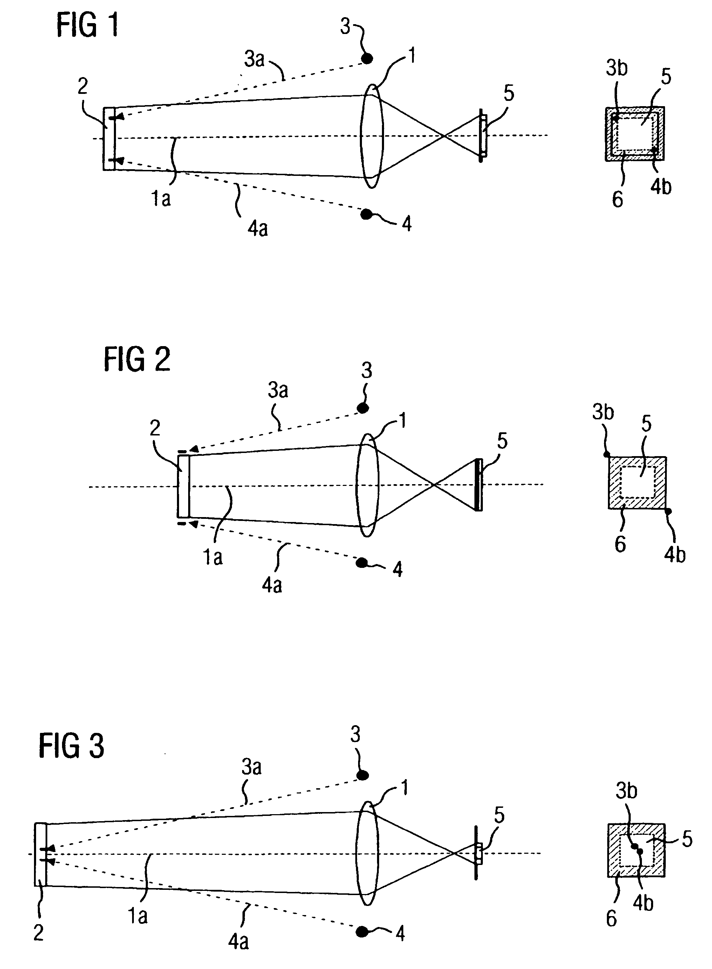

Befindet sich das Objektiv 1 im richtigen Abstand vom Objekt 2, befinden sich die aufgrund der auf dem Objekt 2 auftreffenden Lichtstrahlen 3a, 4a auf dem Bildaufnahmeelement 5 auftreffenden Bildpunkte 3b, 4b in einem solchen Abstand zueinander, dass sie sich innerhalb des Rahmenstreifens 6 befinden. Dies ist in Figur 1 dargestellt. Ist der Abstand des Objektivs 1 vom Objekt 2 zu gering, ist der Abstand der Bildpunkte 3b, 4b so groß zueinander, dass sich die Bildpunkte 3b, 4b außerhalb des Rahmens 6 des Bildaufnahmeelements 5 befinden. Dies ist in Figur 2 dargestellt. Ist der Abstand des Objektivs 1 vom Objekt 2 zu groß, sind die beiden Bildpunkte 3b, 4b so dicht beieinander, dass sie sich ebenfalls nicht mehr innerhalb des Rahmenstreifens 6 des Bildaufnahmeelements 5 befinden. Dies ist in Figur 3 dargestellt.

Dadurch, dass der Abstand des Objektivs 1 vom Objekt 2 so lange verändert wird, bis sich die beiden Bildpunkte 3b, 4b innerhalb des Rahmenstreifens 6 des Bildaufnahmeelements 5 befinden, lässt sich der richtige Abstand des Objektivs 1 vom Objekt 2 einstellen.

## Patentansprüche

1. Verfahren zur Ausrichtung und Abstandseinstellung einer Kamera mit Festobjektiv (1), **dadurch gekennzeichnet, dass** auf ein von der Kamera zu erfassendes Objekt (2) wenigstens zwei in einem Winkel zur Objektivachse (1a) verlaufende Lichtstrahlen (3a, 4a) projiziert werden und der Abstand der durch die Lichtstrahlen (3a, 4a) erzeugten Bildpunkte (3b, 4b) auf dem Bildaufnahmeelement (5) der Kamera mit einem Referenzmaß (6) verglichen wird.

2. Verfahren nach Anspruch 1, **dadurch gekennzeichnet, dass** die Lichtstrahlen (3a, 4a) konvergieren.

3. Verfahren nach Anspruch 1 oder 2, **dadurch gekennzeichnet, dass** die Lichtmenge der auf das Bildaufnahmeelement (5) auftreffenden Bildpunkte (3b, 4b) gemessen wird.

4. Verfahren nach Anspruch 3, **dadurch gekennzeichnet, dass** die Messung der Lichtmenge der Bildpunkte (3b, 4b) mittels einer Blende erfolgt.

5. Verfahren nach einem der Ansprüche 1 bis 4, **dadurch gekennzeichnet, dass** das Ergebnis des Vergleichs signalisiert wird.

6. Verfahren nach Anspruch 5, **dadurch gekennzeichnet, dass** das Ergebnis des Vergleichs optisch signalisiert wird.

7. Kamera mit Festobjektiv (1), **dadurch gekennzeichnet, dass** wenigstens zwei Lichtquellen (3, 4) vorhanden sind, welche jeweils einen auf ein von der Kamera zu erfassendes Objekt (2) gerichteten Lichtstrahl (3a, 4a) abgeben, der je in einem Winkel zur Objektivachse verläuft und einen Bildpunkt (3b, 4b) erzeugt, und dass das Bildaufnahmeelement (5) der Kamera ein Referenzmaß (6) aufweist.

8. Kamera nach Anspruch 7, **dadurch gekennzeichnet, dass** das Referenzmaß (6) als streifenförmiger Rahmen ausgebildet ist, welcher am Rand des Bildaufnahmeelements (5) angeordnet ist.

9. Kamera nach Anspruch 8, **dadurch gekennzeichnet, dass** der Rahmen (6) als Messelement ausgebildet ist, zur Messung der Lichtmenge.

## Claims

1. Method for the alignment and distance adjustment of a camera with a fixed objective (1), **characterised in that** at least two light beams (3a, 4a) running at an angle to the objective axis (1a) are projected onto an object (2) to be captured by the camera and the distance between the image points (3b, 4b) produced by the light beams (3a, 4a) on the image recording element (5) of the camera is compared with a reference scale (6).

2. Method according to claim 1, **characterised in that** the light beams (3a, 4a) converge.

3. Method according to claim 1 or 2, **characterised in that** the amount of light of the image points (3b, 4b) incident on the image recording element (5) is measured.

4. Method according to claim 3, **characterised in that** the amount of light of the image points (3b, 4b) is measured by means of a diaphragm.

5. Method according to any one of claims 1 to 4, **characterised in that** the result of the comparison is signalled.

6. Method according to claim 5, **characterised in that** the result of the comparison is signalled by optical means.

7. Camera with a fixed objective (1), **characterised in that** at least two light sources (3, 4) are present, each of which emits a respective light beam (3a, 4a) which is directed at an object (2) to be captured by the camera and each of which runs at an angle to the objective axis and produces an image point (3b, 4b) and **in that** the image recording element (5) of the camera has a reference scale (6).

8. Camera according to claim 7, **characterised in that** the reference scale (6) is embodied as a strip-shaped frame which is arranged at the edge of the image recording element (5).

9. Camera according to claim 8, **characterised in that** the frame (6) is embodied as a measuring element, for measuring the amount of light.

## Revendications

1. Procédé pour l'orientation et le réglage de la distance d'une chambre photographie à objectif fixe (1), **caractérisé en ce qu'**on projette sur un objet (2) devant être saisi par la chambre photographie au moins deux rayons lumineux (3a, 4a) faisant un certain angle avec l'axe (1a) de l'objectif, et que la distance entre les points images (3b, 4b), produits par les rayons lumineux (3a, 4a) sur l'élément d'enregistrement d'image (5) de la chambre photographie, est comparée à une mesure de référence (6).

2. Procédé selon la revendication 1, **caractérisé en ce que** les rayons lumineux (3a, 4a) convergent.

3. Procédé selon la revendication 1 ou 2, **caractérisé en ce qu'**on mesure la quantité de lumière des points images (3b, 4b) incidente sur l'élément d'enregistrement d'image (5).

4. Procédé selon la revendication 3, **caractérisé en ce que** la mesure de la quantité de lumière des points images (3b, 4b) s'effectue à l'aide d'un diaphragme.

5. Procédé selon l'une des revendications 1 à 4, **caractérisé en ce que** le résultat de la comparaison est signalé.

6. Procédé selon la revendication 5, **caractérisé en ce que** le résultat de la comparaison fait l'objet d'une signalisation optique.

7. Chambre photographie à objectif fixe (1), **caractérisée par** la présence d'au moins deux sources lumineuses (3, 4), dont chacune émet un rayon lumineux (3a, 4a), orienté vers l'objet (2) devant être saisi par la chambre photographie, les rayons lumineux faisant un certain angle avec l'axe de l'objectif, chaque rayon lumineux produisant un point image (3b, 4b), et l'élément d'enregistrement d'image (5) de la chambre photographie est une mesure de référence (6).

8. Chambre photographie selon la revendication 7, **caractérisée en ce que** la mesure de référence (6) est configurée comme un cadre formant bande, qui est disposée au bord de l'élément d'enregistrement d'image (5).

9. Chambre photographie selon la revendication 8, **caractérisée en ce que** le cadre (6) est configuré comme un élément de mesure, destiné à la mesure de la quantité de lumière.
